# EUROPEAN PATENT APPLICATION

(11) **EP 4 679 269 A1**
(43) Date of publication of application: **14.01.2026**
(21) Application number: 24766412.1
(22) Date of filing: 04.03.2024
(51) Int. Cl.: G06F 9/50

(54) **STORAGE METHOD AND APPARATUS FOR POINT CLOUD DATA, AND DEVICE AND MEDIUM**

(30) Priority: 06.03.2023 CN 202310213136
(71) Applicant: Shining 3D Tech Co., Ltd., Hangzhou, Zhejiang 311258 (CN)
(72) Inventor: JIA, Yongjie, Hangzhou, Zhejiang 311258 (CN); JIANG, Tengfei, Hangzhou, Zhejiang 311258 (CN); ZHANG, Jian, Hangzhou, Zhejiang 311258 (CN); LIN, Zhongwei, Hangzhou, Zhejiang 311258 (CN); HUANG, Leijie, Hangzhou, Zhejiang 311258 (CN); CHEN, Keming, Hangzhou, Zhejiang 311258 (CN); LIU, Yu, Hangzhou, Zhejiang 311258 (CN); CHEN, Jinming, Hangzhou, Zhejiang 311258 (CN)
(74) Representative: Metida
(86) International application number: PCT/CN2024/079949
(87) International publication number: WO 2024/183697

(57) **Abstract**

The present disclosure relates to relates to a method, an apparatus, a device, and a medium for storing point cloud data. The method includes: acquiring point cloud data of each point in a single frame image; determining valid points satisfying a preset matching condition from all points in the single frame image based on the point cloud data and a preset matching condition; converting the point cloud data of the valid points from a single-precision floating-point format to a half-precision floating-point format and storing the point cloud data with the half-precision floating-point format. According to the technical solution of the present disclosure, the memory requirements for scanning tasks can be reduced while retaining data details and ensuring real-time performance.

## Description

The present application claims the priority to Chinese patent application with application No. 202310213136.X, filed on March 6, 2023, in China National Intellectual Property Administration, entitled "STORAGE METHOD AND APPARATUS FOR POINT CLOUD DATA, AND DEVICE AND MEDIUM" the content of which is hereby incorporated herein fully by reference into the present application for all purposes.

### Technical Field

The present application relates to a field of scanning technologies, and specifically to a method, an apparatus, a device, and a medium for storing point cloud data.

### BACKGROUND

Point cloud data refers to a set of vectors in a three-dimensional coordinate system, which can be acquired by a scanning device. As camera resolution of the scanning device increases, concurrently processing multiple tasks becomes challenging due to the large volume of scan data and insufficient computer memory, leading to task failure. Therefore, there is a need to reduce memory requirements of scanning tasks on the scanning device.

In related art, the memory requirements are reduced by lowering the resolution of the point cloud or by compressing the data. However, reducing resolution degrades data quality, resulting in loss of details and making it unsuitable for applications requiring high precision, such as intraoral scanning or professional scanning. Alternatively, data compression requires significant computational resources, making it unsuitable for tasks demanding high real-time performance and computational efficiency.

### SUMMARY

The technical problem to be solved by the present disclosure is to address the issues in the prior art where reducing memory requirements either degrades data quality or requires high computational overhead.

To solve the above technical problem, the present disclosure provides a method, an apparatus, a device, and a medium for storing point cloud data.

According to a first aspect, an embodiment of the present disclosure provides a method for storing point cloud data, including:
acquiring point cloud data of each point in a single frame image;
determining valid points satisfying a preset matching condition from all points in the single frame image based on the point cloud data and a preset matching condition;
converting the point cloud data of the valid points from a single-precision floating-point format to a half-precision floating-point format and storing the point cloud data with the half-precision floating-point format.

According to a second aspect, an embodiment of the present disclosure provides an apparatus for storing point cloud data, including:
an acquisition module, configured to acquire point cloud data of each point in a single frame image;
a determination module, configured to determine valid points satisfying a preset matching condition from all points in the single frame image based on the point cloud data and a preset matching condition;
a storing module, configured to convert the point cloud data of the valid points from a single-precision floating-point format to a half-precision floating-point format and store the point cloud data with the half-precision floating-point format.

According to a third aspect, an embodiment of the present disclosure provides an electronic device, comprising: a processor; a memory for storing executable instructions for the processor; wherein the processor is configured to read the executable instructions from the memory and execute the instructions to implement the method for storing point cloud data according to the first aspect.

According to a fourth aspect, an embodiment of the present disclosure provides a computer-readable storage medium, wherein the storage medium stores a computer program, and the computer program, when executed by a processor, implements the method for storing point cloud data according to the first aspect.

The technical solution provided by the embodiments of the present disclosure has the following advantages compared to the prior art: by acquiring the point cloud data of each point in a single-frame image, determining valid points satisfying the matching condition from all points in the single-frame image, converting the point cloud data of the valid points from a single-precision floating-point format to a half-precision floating-point format, and storing the point cloud data in the half-precision floating-point format, the memory requirements of the device for storing point cloud data are reduced. This solves the problem of being unable to complete tasks when concurrently processing multiple tasks due to the large volume of scan data and insufficient computer memory. It reduces the memory demand of scanning tasks while preserving data details and ensuring real-time performance. Compared to methods involving reducing resolution or data compression, it can adapt to applications requiring high precision, such as intraoral scanning or professional scanning, and meet the requirements of tasks with high real-time and computational demands. Additionally, the present disclosure enables completing scanning tasks with higher memory requirements on lower-memory configurations or the same configuration, thereby reducing the hardware cost of scanning devices like intraoral scanners or professional scanners. It can also be applied to portable devices like laptops, mobile phones, and tablets, allowing users to generate and view 3D models on portable devices, facilitating communication between users and viewers, or between doctors and patients.

It should be understood that the above general description and the following detailed description are exemplary and explanatory only and do not limit the present disclosure.

### BRIEF DESCRIPTION OF THE DRAWINGS

The accompanying drawings, which are incorporated into and constitute a part of this specification, illustrate embodiments consistent with the present application and, together with the description, serve to explain the principles of the present application.

To more clearly illustrate the embodiments of the present application or the technical solutions in the prior art, the following briefly introduces the drawings required for describing the embodiments or the prior art. It is apparent that, for those of ordinary skill in the art, other drawings can be derived from these accompanying drawings without creative effort.
FIG. 1 is a schematic flowchart of a method for storing point cloud data according to an embodiment of the present disclosure;
FIG. 2 is a schematic flowchart of another method for storing point cloud data according to an embodiment of the present disclosure;
FIG. 3 is a structural schematic diagram of an apparatus for storing point cloud data according to an embodiment of the present disclosure.

### DETAILED DESCRIPTION

To make the objectives, technical solutions, and advantages of the present disclosure clearer, the solutions of the present disclosure will be further described below. It should be noted that the embodiments of the present disclosure and the features in the embodiments may be combined with each other without conflict.

Many specific details are set forth in the description below to facilitate a full understanding of the present disclosure. However, the present disclosure may also be implemented in other ways different from those described herein. Obviously, the embodiments in the specification are only a part of the embodiments of the present disclosure, not all of them.

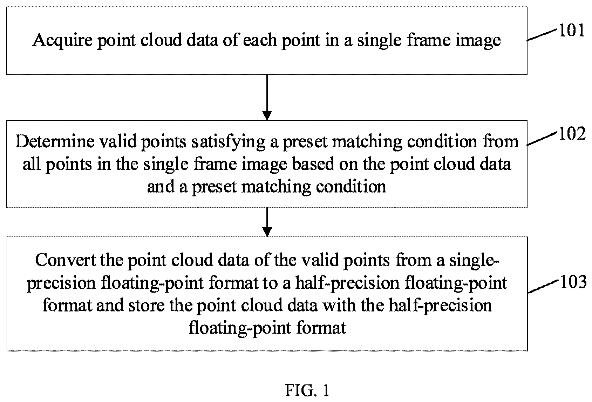

FIG. 1 is a schematic flowchart of a method for storing point cloud data according to an embodiment of the present disclosure. The method provided by this embodiment may be executed by an apparatus for storing point cloud data, which may be implemented in software and/or hardware and integrated on any electronic device with computing capability.

As shown in FIG. 1, the method for storing point cloud data provided by the embodiment of the present disclosure may include:
Step 101: point cloud data of each point in a single frame image is acquired.

The method of the embodiment may be applied to a device storing point cloud data in scanning scenarios, for example, point cloud data may be stored in the memory of a device such as a tablet computer.

In this embodiment, the scanning device scans a target object to obtain multiple scan frames. For each scan frame (i.e., the single frame image), the point cloud data of each pixel point in that scan image may be acquired. The point cloud data includes, but is not limited to, three-dimensional coordinate information, normal vector information, etc.

As an example, in response to a scanning task for the target object, a depth camera is used to capture a depth map of the target object. The point cloud data of each point in the single frame image is acquired by performing calculation based on the depth map, the point cloud data is served as a preliminary model of the target object.

Step 102: valid points satisfying a preset matching condition from all points in the single frame image are determined based on the point cloud data and a preset matching condition.

In this embodiment, a matching condition is preset to determine whether the point cloud data of each point in the single frame image satisfies the matching condition. Based on this condition, the valid points and invalid points are determined from all points in the single frame image. The valid points are those used for subsequent calculation steps, while the invalid points are data ineffective for subsequent steps. By identifying the valid points within the single frame image, the valid points may be stored for subsequent processing.

Among them, there are various ways to determine whether the point cloud data satisfies the matching condition.

As one example, the point cloud data includes three-dimensional coordinate information, which contains a depth value. Then, determining valid points satisfying the matching condition based on the point cloud data and the preset matching condition includes: determining points with an invalid depth value as invalid points from all points in the single frame image, removing the invalid points, and retaining the remaining points as the valid points.

Among them, the invalid depth value may refer to a point with a depth value of zero. In some scenarios, the depth value is relative to the camera as a baseline. It should be noted that depending on the specific application, an invalid depth value could also mean a depth value outside a specified numerical range, etc., which is not specifically limited here.

As another example, if the point cloud data also includes normal vector information, then points for which normal vector information could not be acquired are determined as invalid points, the invalid points are removed from all points in the single frame image, and the remaining points are retained as valid points.

As another example, for scanning scenarios where the point cloud data also includes texture information, points for which texture information could not be acquired are determined as invalid points, the invalid points are removed from all points in the single frame image, and the remaining points are retained as valid points.

Step 103: the point cloud data of the valid points are converted from a single-precision floating-point format to a half-precision floating-point format, and the point cloud data with the half-precision floating-point format are stored.

In this embodiment, only the point cloud data of the valid points is stored. Since point cloud data is stored in a floating-point format, the point cloud data of the valid points is converted from the single-precision floating-point format (typically 32-bit) to the half-precision floating-point format (typically 16-bit), and stored accordingly.

Among them, the valid points can be stored as an ordered point cloud or an unordered point cloud. It should be noted that subsequent embodiments describe storing as an ordered point cloud, and the operational differences between unordered and ordered point clouds are not explicitly stated. However, it is understood that the unordered point clouds do not require a corresponding table, this should not be construed as a limitation of this application.

Optionally, a half-IEEE technique is used to implement the point cloud data structure, converting the point cloud data of the valid points from the single-precision floating-point format (IEEE 754 32-bit) to the half-precision floating-point format (half-IEEE 754-base 16-bit). Single-precision floating-point is based on IEEE 754, a standard for binary floating-point arithmetic. IEEE 754 specifies three floating-point formats: single-precision, double-precision, and extended-precision. Half-IEEE implements a half-precision floating-point format based on IEEE 754, where the half-precision is 16 bits, or 2 bytes, and the single-precision is 32 bits, or 4 bytes.

As an example, taking the three-dimensional coordinate information (x, y, z) and the normal vector information (nₓ, n_{y}, n_{z}), the x, y, z of the three-dimensional coordinate and the n_{y}, n_{y}, n_{z} of the normal information are typically represented as floating point, the floating point corresponds to a single-precision floating-point. The three-dimensional coordinate information and normal vector information for each point thus occupies 24 bytes. Based on the half-IEEE technique, a first coordinate value x, a second coordinate value y, and a third coordinate value z in the three-dimensional coordinate information are each converted from the single-precision floating-point format to the half-precision floating-point format, as well as a first normal value nₓ, a second normal value n_{y}, and a third normal value n_{z} in the normal vector information, are each converted from the single-precision floating-point format to the half-precision floating-point format. After conversion, the three-dimensional coordinate information and normal vector information for each point occupy only 12 bytes. The point cloud data of the valid points is then stored in the half-precision floating-point format. During subsequent calculation steps, the stored point cloud data of the valid points is invoked and converted from the half-precision floating-point format to the single-precision floating-point format and used for the subsequent calculation steps.

According to the technical solution of the embodiments of the present disclosure, by acquiring the point cloud data of each point in a single frame image, determining valid points satisfying the preset matching condition from all points in the single frame image, converting the point cloud data of the valid points from a single-precision floating-point format to a half-precision floating-point format, and storing the point cloud data in the half-precision floating-point format, the memory requirements of the device for storing the point cloud data are reduced. This solves the problem of being unable to complete tasks when concurrently processing multiple tasks due to the large volume of scanning data and insufficient computer memory. It reduces the memory demand of scanning tasks while preserving data details and ensuring real-time performance. Compared to methods involving reducing resolution or data compression, it can adapt to applications requiring high precision, such as intraoral scanning or professional scanning, and meet the requirements of tasks with high real-time and computational demands. Additionally, the present application enables completing scanning tasks with higher memory requirements on lower-memory configurations or the same configuration. This may not only reduce the hardware cost of scanning devices like intraoral scanners or professional scanners but also allows application to portable devices like laptops, mobile phones, and tablets. Users may thus generate and view 3D models on portable devices, facilitating communication between users and viewers, or between doctors and patients.

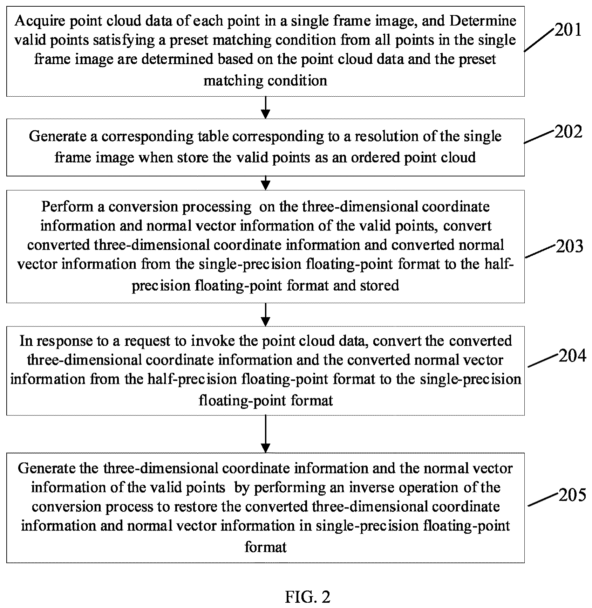

Based on the foregoing embodiments, to further reduce the memory requirements of scanning tasks and achieve memory optimization for 3D point cloud data, specifically for the case where valid points are stored as an ordered point cloud, FIG. 2 is a schematic flowchart of another method for storing point cloud data according to an embodiment of the present disclosure. As shown in FIG. 2, the method includes:
Step 201: point cloud data of each point in a single frame image is acquired, and valid points satisfying a preset matching condition from all points in the single frame image are determined based on the point cloud data and the preset matching condition.

The explanations for steps 101 and 102 in the previous embodiment also apply to the step 201 and will not be repeated here.

Step 202: a corresponding table is generated corresponding to a resolution of the single frame image when storing the valid points as an ordered point cloud.

Among them, the corresponding table (a bool list) is used to indicate whether a point in the single frame image is a valid point.

In this embodiment, the valid points are stored as an ordered point cloud, and the corresponding table is used to represent valid and invalid points within the single frame image. The size of the corresponding table corresponds to the resolution of the single frame image. For example, for a single frame image of size M x N, an M x N corresponding table is generated. The position of each point in the corresponding table corresponds to its pixel position in the single frame image.

As an example, use n bool (1 bit) list *Lₙ* to represent whether each point in the single frame image is a valid point. For a valid point, the value at its corresponding position in the corresponding table is set to 1. For an invalid point, the value at its corresponding position in the corresponding table is set to 0. Consequently, for the point cloud data, only the three-dimensional coordinate information and normal vector information of the valid points need to be stored.

This approach allows storing the point cloud as an ordered structure without needing to store data for invalid points, further reducing memory requirements.

Step 203: a conversion processing is performed on the three-dimensional coordinate information and normal vector information of the valid points, converted three-dimensional coordinate information and converted normal vector information are converted from the single-precision floating-point format to the half-precision floating-point format and stored.

In this embodiment, the point cloud data includes the three-dimensional coordinate information and the normal vector information. To further reduce memory requirements for storing the point cloud data and achieve memory optimization for three-dimensional point cloud data, the three-dimensional coordinate information and the normal vector information of the valid points undergo conversion processing before storage.

The conversion processing for the three-dimensional coordinate information is described below.

In one embodiment of the present disclosure, performing conversion processing on the three-dimensional coordinate information of the valid points includes: extracting depth value of the valid point based on the three-dimensional coordinate information; determining the converted three-dimensional coordinate information based on the depth value and the pixel coordinates of the valid point.

In this embodiment, for the three-dimensional coordinate information (x, y, z), it may be represented by its depth value. Given the depth value, the three-dimensional coordinates may be reconstructed. The pixel coordinates (u, v) of the valid point may be determined based on a position of the valid point in Lₙ. Then, using the camera intrinsic parameters K, the three-dimensional coordinates may be reconstructed via the formula: z_{c} Pₓ = KP_{c}, where Pₓ is the pixel coordinate, z_{c} is the scale factor, and P_{c} is the three-dimensional coordinate. Substituting the depth value of the three-dimensional coordinate into the formula allows reconstruction of the three-dimensional coordinates. Thus, the original three-dimensional coordinate information, which occupied three float values, may be represented by the depth value which occupied a single float value, further reducing the memory required for storing the point cloud data.

The conversion processing for the normal vector information is described below. Among them, the normal vector information includes a first normal component value, a second normal component value, and a third normal component value.

In one embodiment of the present disclosure, performing conversion processing on the normal vector information of the valid points includes: retaining any two of the first normal component value, second normal component value, and third normal component value as the converted normal vector information.

In this embodiment, for the normal vector information (nₓ, n_{y}, n_{z}), only two component values are stored, for example, the first normal value nₓ and the second normal value n_{y}. Given the first and second normal values, the normal vector information may be reconstructed via the formula: nₓ²+ n_{y} ²+ n_{z} ²=1. Substituting the first normal value nₓ and the second normal value n_{y} into the formula may reconstruct the normal vector information. Thus, the original normal vector information, which occupied three float values, may be represented by the depth value which occupied by two single float value, further reducing the memory required for storing the point cloud data.

In an embodiment of the present disclosure, performing conversion processing on the normal vector information of the valid points includes: determining a specified direction based on the first normal component value, the second normal component value, and the third normal component value of the valid point; determining a first rotation angle between a first coordinate axis and the specified direction, and a second rotation angle between a second coordinate axis and the specified direction; using the first rotation angle and the second rotation angle as the converted normal vector information.

In this embodiment, for the normal vector information (nₓ, n_{y}, n_{z}), it may be converted into two angles for representation. For example, for the normal vector information (nₓ, n_{y}, n_{z}), the specified direction n is determined. Within the 3D coordinate system xyz, an angle between the specified direction n and the x-axis is recorded as α, an angle between the specified direction n and the y-axis is recorded as β, and an angle between the specified direction n and the z-axis is recorded as y, where (cosα, cosβ, cosy) = (nₓ, n_{y}, n_{z}). The first coordinate axis and the second coordinate axis may be any two of the x-axis, the y-axis, and the z-axis. For instance, storing α and γ. Thus, the original normal vector information, which occupied three float values, may be represented by the depth value which occupied by two single float value, further reducing the memory required for storing the point cloud data.

Step 204: in response to a request to invoke the point cloud data, the converted three-dimensional coordinate information and the converted normal vector information are converted from the half-precision floating-point format to the single-precision floating-point format.

In this embodiment, after storing the point cloud data of the valid points in the single frame image into memory, when calculating a high-quality model of the target object based on the point cloud data, the stored point cloud data is invoked. Taking the point cloud data including the three-dimensional coordinate information and the normal vector information as an example, using the half-IEEE and IEEE 754 techniques to convert the depth value, two normal vector or two angles are converted from the half-precision floating-point format back to the single-precision floating-point format.

Step 205: the three-dimensional coordinate information and the normal vector information of the valid points is generated by performing an inverse operation of the conversion process to restore the converted three-dimensional coordinate information and normal vector information in single-precision floating-point format.

In this embodiment, corresponding to the conversion processing in the preceding steps, the inverse operation of that conversion processing is applied to the converted three-dimensional coordinate information and the normal vector information to reconstruct the original three-dimensional coordinate information and normal vector information of the valid point.

As an example, based on position of the valid point in the corresponding table, pixel coordinates of the valid point is determined. Using the pixel coordinates and an intrinsic parameter of the camera, the original three-dimensional coordinate information is reconstructed from the single-precision depth value using the formula z_{c} Pₓ = KP*_{c}*, where Pₓ is the pixel coordinate, z_{c} is the scale factor, and P_{c} is the three-dimensional coordinate, and K represents the intrinsic parameter of the camera.

As another example, generate the normal vector information for the valid point based on the two retained normal values from the first normal component value, the second normal component value, and the third normal component value of the valid point, and a mapping relationship between the first normal component value, the second normal component value, and the third normal component value. In this example, the mapping relationship is nₓ²+ n_{y} ²+ n_{z} ²=1.

As another example, based on the mapping relationship between the three normal components, calculate the third rotation angle β according to the first rotation angle α and the second rotation angle γ of the valid point. Then, determine the first normal component value, the second normal component value, and the third normal component value based on the cosine values of these three angles, thereby generating the normal vector information for the valid points.

Step 206: a model corresponding to the single frame image is generated by performing calculations based on the three-dimensional coordinate information and the normal vector information of the valid points.

In this embodiment of the present disclosure, by performing conversion processing on point cloud data such as three-dimensional coordinate information and normal vector information, and specifically for the case of storing valid points as an ordered point cloud, using a corresponding table to represent the valid points and storing only the point cloud data of the valid points achieves an ordered point cloud structure. This further reduces the memory requirements of scanning tasks, achieves memory optimization for three-dimensional point cloud data, and enables completing tasks with high memory demands on lower-memory configurations or the same configuration.

In one embodiment of the present disclosure, after storing the point cloud data in the half-precision floating-point format, the method further includes sending the point cloud data in the half-precision floating-point format to a designated receiving end. Sending the stored point cloud data in this format can accelerate transmission speed and reduce transmission burden. For example, When the method of storing the point cloud data is executed by a computer, the point cloud data in the half-precision floating-point format can be sent to a tablet. When the method of storing the point cloud data is executed by a tablet, the point cloud data in the half-precision floating-point format can be sent to a computer. Optionally, when the method of storing the point cloud data is executed by a tablet or a computer, the tablet or computer may also perform calculations based on the point cloud data in the half-precision floating-point format, generate a result or model, and transmit it to a cloud platform. When the storage method of the point cloud data is executed by an intraoral scanner host or a scanner host, the point cloud data in the half-precision floating-point format can be sent to a tablet, computer, or cloud platform. When the storage method of the point cloud data is executed by a CPU (Central Processing Unit), the point cloud data in the half-precision floating-point format can be sent to a GPU (Graphics Processing Unit).

In one embodiment of the present disclosure, storing the point cloud data in the half-precision floating-point format includes: storing the point cloud data in the half-precision floating-point format into a graphics card device. This can reduce video memory consumption within the device.

In one embodiment of the present disclosure, the point cloud data in the half-precision floating-point format may also be used for direct calculation. In response to a calculation request for the point cloud data, a calculation operation on the half-precision floating-point point cloud data is performed according to Advanced Vector Extensions (AVX) instructions. This acceleration method based on AVX instructions is suitable for performing the same calculation operation on different data. As one example, when transforming data from the camera coordinate system to the world coordinate system, the calculation operation on the half-precision floating-point point cloud data is executed using the AVX instruction acceleration method. By combining half-precision data with instruction acceleration, more data may be calculated simultaneously compared to single-precision, thereby improving code efficiency.

In one embodiment of the present disclosure, the half-precision floating-point format point cloud data may also be used for direct display. In response to a display request for the point cloud data, perform a direct display operation on the half-precision floating-point format point cloud data.

In one embodiment of the present disclosure, leveraging the bounded range of the data, conversion is used to enhance the precision of the stored half-precision floating-point format point cloud data. Converting the point cloud data of the valid points from single-precision to half-precision floating-point format includes: performing offset processing on the numerical values of the single-precision floating-point format point cloud data to convert value range of the numerical values from a first range to a second range. Performing modulo processing on the numerical values of the single-precision floating-point format point cloud data to transform their range from the first range to a third range. Then, converting processed point cloud data from single-precision to half-precision floating-point format. The values of the point cloud data in single-precision floating-point format are located within a first range. If the first range is less than a threshold value, the offset process is applied to the values. If the first range is greater than or equal to the threshold value, the modulo processing is applied to the values. For example, if the current value range is between 100 and 120, applying an offset (subtracting 110) transforms the values to the range -10 to 10 to enhance precision. If the current value range is between -200 and 200, applying a modulo processing (dividing by 200) transforms the values to the range -1 to 1 to enhance precision. This is because the half-precision format offers its highest precision when values lie within or close to the range (-1, 1). By applying the offset or modulo processing, values are shifted into or near this range, thereby improving the precision of the stored half-precision floating-point point cloud data.

In some usage scenarios (such as intraoral scanning), the value range (first range) of the single-precision floating-point point cloud data is relatively small. Only an offset process (subtraction) is needed to achieve ranges like (-10, 10), (-5, 5), or (-1, 1). Not only does this provide sufficient precision to meet usage requirements, but the conversion is also more efficient. For other usage scenarios (such as industrial product scanning), where the value range (first range) of the single-precision floating-point point cloud data is larger, the modulo (division) can be chosen to meet the precision requirements.

In this embodiment, when performing calculations, the reverse offset processing of the previously applied offset or reverse modulo processing is performed on the numerical values of the half-precision floating-point point cloud data. For example, if an offset (subtracting 110) was applied in the previous steps, the reverse operation here is adding 110. If a modulo processing (dividing by 200) was applied previously, the reverse operation here is multiplying by 200. Subsequently, the point cloud data after the reverse operation is converted from half-precision floating-point format back to single-precision floating-point format. Computations are then performed based on the single-precision floating-point point cloud data. Consequently, due to minimal loss during conversion between single-precision and half-precision, applying the reverse operation (offset or compression) to the half-precision data before converting back to single-precision for computation results in higher computational precision, achieving accuracy comparable to computations performed directly in single-precision.

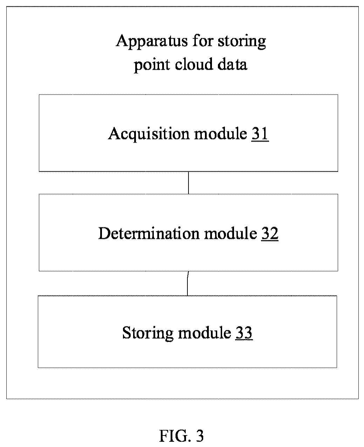

FIG. 3 is a structural schematic diagram of an apparatus for storing point cloud data according to an embodiment of the present disclosure. As shown in FIG. 3, the apparatus includes: an acquisition module 31, a determination module 32, and a storing module 33.

The acquisition module 31 is configured to acquire point cloud data of each point in a single frame image.

The determination module 32 is configured to determine valid points satisfying a preset matching condition from all points in the single frame image based on the point cloud data and a preset matching condition.

The storing module 33 is configured to convert the point cloud data of the valid points from a single-precision floating-point format to a half-precision floating-point format and store the point cloud data with the half-precision floating-point format.

In one embodiment of the present disclosure, the point cloud data includes a depth value. The determination module 32 is specifically configured to: determine points with a depth value of zero as invalid points; remove the invalid points from all points in the single frame image to obtain the valid points.

In one embodiment of the present disclosure, the point cloud data includes three-dimensional coordinate information and normal vector information. The storing module 33 comprises: a generation unit which is configured to generate a corresponding table corresponding to the resolution of the single frame image, wherein the corresponding table is used to indicate whether a point in the single frame image is a valid point when storing the valid points as an ordered point cloud; a conversion unit, configured to perform conversion processing on the three-dimensional coordinate information and normal vector information of the valid points, and convert the converted three-dimensional coordinate information and normal vector information from the single-precision floating-point format to the half-precision floating-point format.

In one embodiment of the present disclosure, the conversion unit is specifically configured to: extract a depth value of the valid point based on the three-dimensional coordinate information; the converted three-dimensional coordinate information based on the depth values and pixel coordinates of the valid points, the pixel coordinates of the valid points are determined based on positions of the valid points in the corresponding table.

In one embodiment of the present disclosure, the normal vector information includes a first normal component value, a second normal component value, and a third normal component value. The conversion unit is specifically configured to: retain any two of the first normal component value, the second normal component value, and the third normal component value as the converted normal vector information.

In one embodiment of the present disclosure, the normal vector information includes a first normal component value, a second normal component value, and a third normal component value. The conversion unit is specifically configured to: determine a specified direction based on the valid point's first normal component value, second normal component value, and third normal component value; determine a specified direction based on the first normal component value, the second normal component value, and the third normal component value of the valid point; determine a first rotation angle between a first coordinate axis and the specified direction, and a second rotation angle between a second coordinate axis and the specified direction; use the first rotation angle and the second rotation angle as the converted normal vector information.

In one embodiment of the present disclosure, the apparatus further comprises: a calculation module, configured to, in response to a request to invoke the point cloud data, convert the converted three-dimensional coordinate information and the converted normal vector information from the half-precision floating-point format to the single-precision floating-point format; generate the three-dimensional coordinate information and the normal vector information of the valid points by performing an inverse operation of the conversion process to restore the converted three-dimensional coordinate information and normal vector information in single-precision floating-point format; generate a model corresponding to the single frame image by performing calculations based on the three-dimensional coordinate information and the normal vector information of the valid points.

In one embodiment of the present disclosure, the apparatus further comprises: a sending module, configured to send the point cloud data in the half-precision floating-point format to a designated receiving end, wherein the method is executed by a scanning device in a mouth, the designated receiving end includes a tablet, a computer, and a cloud platform; the method is executed by a CPU, the designated receiving end includes a GPU.

In one embodiment of the present disclosure, the storing module 33 is specifically configured to: store the point cloud data with the half-precision floating-point format into a graphics card device.

In one embodiment of the present disclosure, the apparatus further comprises: a first calculation module, configured to, in response to a calculation request for the point cloud data, perform a calculation operation on the point cloud data in the half-precision floating-point format according to Advanced Vector Extensions (AVX) instructions. Or in response to a display request for the point cloud data, the first calculation module is configured to perform a display operation on the point cloud data in the half-precision floating-point format.

In one embodiment of the present disclosure, the storing module 33 is specifically configured to: perform offset processing on numerical values of the point cloud data in the single-precision floating-point format to convert value range of the numerical values from a first range to a second range; perform modulo processing on the numerical values of the point cloud data in the single-precision floating-point format to convert the value range of the numerical values from the first range to a third range; and convert processed point cloud data from the single-precision floating-point format to the half-precision floating-point format.

In one embodiment of the present disclosure, the apparatus further comprises: a second calculation module, configured to: perform reverse offset processing on the numerical values of the point cloud data in the half-precision floating-point format, or perform reverse modulo processing on the numerical values of the point cloud data in the half-precision floating-point format; convert reversely processed point cloud data from the half-precision floating-point format to the single-precision floating-point format, and perform calculations based on the point cloud data in the single-precision floating-point format.

The apparatus for storing point cloud data provided by the embodiments of the present disclosure may execute any method for storing point cloud data provided by the embodiments of the present disclosure. The apparatus includes functional modules corresponding to the execution method and delivers the associated beneficial effects. For details not exhaustively described in this device embodiment, reference may be made to the descriptions in any method embodiment of the present disclosure.

The present disclosure also provides an electronic device, which includes one or more processors and a memory. The processors may be central processing units (CPUs) or other forms of processing units with data processing capabilities and/or instruction execution capabilities. They can control other components within the electronic device to perform desired functions. The memory may include one or more computer program products, which can comprise various forms of computer-readable storage media, such as volatile memory and/or non-volatile memory. Volatile memory may include, for example, random access memory (RAM) and/or cache memory. Non-volatile memory may include, for example, read-only memory (ROM), hard disks, flash memory, etc. One or more computer program instructions may be stored on the computer-readable storage medium, and the processors may execute these instructions to implement the methods of the disclosed embodiments described above and/or other desired functions. Content such as input signals, signal components, and noise components may also be stored in the computer-readable storage medium.

In one example, the electronic device may further include: an input device and an output device. These components are interconnected via a bus system and/or other forms of connection mechanisms. Additionally, the input device may include, for example, a keyboard, mouse, etc. The output device may output various types of information externally, including determined distance information, direction information, etc. The output device may include, for example, a display, speakers, a printer, communication networks, and remotely connected output devices. Furthermore, depending on specific application scenarios, the electronic device may include any other appropriate components, such as buses and input/output interfaces.

In addition to the aforementioned methods and devices, embodiments of the present disclosure may also be computer program products comprising computer program instructions. When executed by a processor, these instructions cause the processor to perform any method provided in the disclosed embodiments.

Computer program products may be written using any combination of one or more programming languages to generate program code for executing the operations of the disclosed embodiments. Programming languages include object-oriented programming languages such as Java and C++, as well as conventional procedural programming languages such as the "C" language or similar programming languages. The program code may be executed entirely on a user computing device, partly on a user device, as a standalone software package, partly on the user computing device and partly on a remote computing device, or entirely on a remote computing device or server.

Moreover, embodiments of the present disclosure may also be computer-readable storage media having computer program instructions stored thereon. When executed by a processor, these instructions cause the processor to perform any method provided in the disclosed embodiments.

The computer-readable storage medium may include any combination of one or more readable media. A readable medium may be a readable signal medium or a readable storage medium. Readable storage media include, but are not limited to, electrical, magnetic, optical, electromagnetic, infrared, or semiconductor systems, apparatuses, or devices, or any combination thereof. More specific examples (a non-exhaustive list) of readable storage media include: electrical connections with one or more wires, portable disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above.

It should be noted that in this document, relational terms such as "first" and "second" are used solely to distinguish one entity or operation from another entity or operation, without necessarily requiring or implying any actual relationship or order between such entities or operations. Furthermore, the terms "comprises," "comprising," or any variations thereof are intended to cover non-exclusive inclusion, such that a process, method, article, or device comprising a list of elements includes not only those elements but also other elements not explicitly listed or inherent to such process, method, article, or device. Without further limitation, an element defined by the phrase "comprising a..." does not preclude the presence of additional identical elements in the process, method, article, or device that includes said element.

The above descriptions are merely specific implementations of the present disclosure, enabling those skilled in the art to understand or implement the disclosure. Various modifications to these embodiments will be apparent to those skilled in the art. The general principles defined herein may be implemented in other embodiments without departing from the spirit or scope of the present disclosure. Therefore, the present disclosure is not limited to the embodiments described herein but shall conform to the broadest scope consistent with the principles and novel features disclosed herein.

### INDUSTRIAL APPLICABILITY

The method for storing point cloud data provided by the present disclosure may reduce the memory requirements of devices for storing point cloud data, solving the problem of being unable to complete tasks when concurrently processing multiple tasks due to the large volume of scan data and insufficient computer memory. It reduces the memory demand of scanning tasks while preserving data details and ensuring real-time performance, demonstrating strong industrial applicability.

## Claims

1. A method for storing point cloud data, the method comprising:
acquiring point cloud data of each point in a single frame image;
determining valid points satisfying a preset matching condition from all points in the single frame image based on the point cloud data and a preset matching condition;
converting the point cloud data of the valid points from a single-precision floating-point format to a half-precision floating-point format and storing the point cloud data with the half-precision floating-point format.

2. The method according to claim 1, wherein the point cloud data comprises a depth value, texture information and normal vector information, the determining the valid points satisfying a preset matching condition from all points in the single frame image based on the point cloud data and a preset matching condition comprises:
determining points with a depth value of zero, and/or points without texture information, and/or points without normal information as invalid point; and
obtaining the valid points by removing the invalid points from all points in the single frame image.

3. The method according to claim 1 or 2, wherein the point cloud data comprises three-dimensional coordinate information and normal vector information, the converting the point cloud data of the valid points from a single-precision floating-point format to a half-precision floating-point format comprises:
generating a corresponding table corresponding to a resolution of the single frame image when storing the valid points as an ordered point cloud, wherein the corresponding table is used to indicate whether a point in the single frame image is a valid point;
performing a conversion processing on the three-dimensional coordinate information and the normal vector information of the valid points and converting converted three-dimensional coordinate information and converted normal vector information from the single-precision floating-point format to the half-precision floating-point format.

4. The method according to claim 3, wherein the performing a conversion processing on the three-dimensional coordinate information of the valid points comprises:
extracting depth values of the valid points based on the three-dimensional coordinate information;
determining the converted three-dimensional coordinate information based on the depth values and pixel coordinates of the valid points, the pixel coordinates of the valid points are determined based on positions of the valid points in the corresponding table.

5. The method according to claim 3, wherein the normal vector information comprises a first normal component value, a second normal component value, and a third normal component value, performing the conversion processing on the normal vector information of the valid points comprises:
retaining any two of the first normal component value, the second normal component value, and the third normal component value as the converted normal vector information.

6. The method according to claim 3, the normal vector information comprises a first normal component value, a second normal component value, and a third normal component value, performing the conversion processing on the normal vector information of the valid points comprises:
determining a specified direction based on the first normal component value, the second normal component value, and the third normal component value of the valid point;
determining a first rotation angle between a first coordinate axis and the specified direction, and a second rotation angle between a second coordinate axis and the specified direction;
using the first rotation angle and the second rotation angle as the converted normal vector information.

7. The method according to claim 3, further comprising:
in response to a request to invoke the point cloud data, converting the converted three-dimensional coordinate information and the converted normal vector information from the half-precision floating-point format to the single-precision floating-point format;
generating the three-dimensional coordinate information and the normal vector information of the valid points by performing an inverse operation of the conversion process to restore the converted three-dimensional coordinate information and normal vector information in single-precision floating-point format;
generating a model corresponding to the single frame image by performing calculations based on the three-dimensional coordinate information and the normal vector information of the valid points.

8. The method according to any claim of the claims 1-7, further comprising:
sending the point cloud data in the half-precision floating-point format to a designated receiving end, wherein the method is executed by a scanning device in a mouth, the designated receiving end comprises a tablet, a computer, and a cloud platform; the method is executed by a CPU, the designated receiving end comprises a GPU.

9. The method according to any claim of the claims 1-7, wherein the storing the point cloud data with the half-precision floating-point format comprises:
storing the point cloud data with the half-precision floating-point format into a graphics card device.

10. The method according to any claim of the claims 1-7, further comprising:
in response to a calculation request for the point cloud data, performing a calculation operation on the point cloud data in the half-precision floating-point format according to Advanced Vector Extensions (AVX) instructions; or
in response to a display request for the point cloud data, performing a display operation on the point cloud data in the half-precision floating-point format.

11. The method according to any claim of the claims 1-7, wherein converting the point cloud data of the valid points from the single-precision floating-point format to the half-precision floating-point format comprises:
performing offset processing on numerical values of the point cloud data in the single-precision floating-point format to convert value range of the numerical values from a first range to a second range; or,
performing modulo processing on the numerical values of the point cloud data in the single-precision floating-point format to convert the value range of the numerical values from the first range to a third range;
converting processed point cloud data from the single-precision floating-point format to the half-precision floating-point format.

12. The method according to claim 11, wherein after storing the point cloud data in the half-precision floating-point format, the method further comprises:
performing reverse offset processing on the numerical values of the point cloud data in the half-precision floating-point format, or performing reverse modulo processing on the numerical values of the point cloud data in the half-precision floating-point format;
converting reversely processed point cloud data from the half-precision floating-point format to the single-precision floating-point format, and performing calculations based on the point cloud data in the single-precision floating-point format.

13. An apparatus for storing point cloud data, comprising:
an acquisition module, is configured to acquire point cloud data of each point in a single frame image;
a determination module, is configured to determine valid points satisfying a preset matching condition from all points in the single frame image based on the point cloud data and a preset matching condition;
a storing module, is configured to convert the point cloud data of the valid points from a single-precision floating-point format to a half-precision floating-point format and store the point cloud data with the half-precision floating-point format.

14. An electronic device, comprising:
a processor;
a storage device for storing instructions executable by the processor;
the processor is used to read the instructions from the storage device and execute the instructions to implement the method for storing point cloud data described in any one of claims 1 to 12.

15. A computer-readable storage medium, **characterized in that** the storage medium stores a computer program, and the computer program is used to execute the method for storing point cloud data described in any one of claims 1 to 12.
